# EUROPEAN PATENT SPECIFICATION

(11) **EP 3 928 968 B1**
(45) Date of publication and mention of the grant of the patent: **27.11.2024**
(21) Application number: 21180092.5
(22) Date of filing: 17.06.2021
(51) Int. Cl.: B29D 29/06, B29D 29/08, F16G 1/14, F16G 1/28, B29C 65/14, B29C 65/00, B29L 29/00

(54) **METHOD OF MANUFACTURING A TIMING BELT WITH A MULTIFUNCTIONAL PROFILED OUTER FACE**
VERFAHREN ZUR HERSTELLUNG EINES ZAHNRIEMENS MIT EINER MULTIFUNKTIONALEN PROFILIERTEN AUSSENFLÄCHE
PROCÉDÉ DE FABRICATION D'UNE COURROIE DE DISTRIBUTION DOTÉE D'UNE FACE EXTÉRIEURE PROFILÉE MULTIFONCTIONNELLE

(30) Priority: 22.06.2020 ES 202030621
(43) Date of publication of application: 29.12.2021
(73) Proprietor: Lindis S.L., 25241 Golmes (ES)
(72) Inventor: MATEOS PIULATA, Miguel, 25241 GOLMES (ES)
(74) Representative: Leone, Eloïse

(56) References cited:
- EP-A1- 3 346 160
- WO-A1-2016/123645
- CN-A- 108 561 504
- DE-A1- 19 953 552
- US-A1- 2005 259 433
- US-A1- 2011 067 801
- B&B MANUFACTURING: "Timing Belts & Components for 3D Printers", INTERNET CITATION, 4 December 2016 (2016-12-04), XP002771849, Retrieved from the Internet <URL:https://web.archive.org/web/20161204020835/https://www.bbman.com/3d-printers/> [retrieved on 20170706]
- ANTEINO: "Customizable GT2 timing belt", INTERNET CITATION, 17 December 2016 (2016-12-17), XP002771848, Retrieved from the Internet <URL:https://www.thingiverse.com/thing:1975381> [retrieved on 20170706]
- LIONALEX: "GT3 120mm Timing Belt", INTERNET CITATION, 9 May 2014 (2014-05-09), XP002771847, Retrieved from the Internet <URL:https://www.thingiverse.com/thing:325085> [retrieved on 20170706]
- ZEN TOOLWORKS: "Zen Toolworks Flexible Filament 3D Printed Timing Belt", 24 July 2014 (2014-07-24), XP054977525, Retrieved from the Internet <URL:https://www.youtube.com/watch?v=xgGvaA9S44E> [retrieved on 20170706]

## Description

### Technical sector.

This invention concerns a method of manufacturing a timing belt with a multifunctional profiled outer face and more specifically for the definition of said profiled outer face on the prefabricated timing belt, supplied with a toothed interior.

### Prior art

Currently, there are a number of known techniques for the definition of a profiled outer face of a timing belt, prefabricated as a semi-finished product and provided with a toothed inner side for joining to the engine of any synchronous transport system.

A first known technique consists of constructing the profiled outer face by applying successive layers of material directly to the outer face of the timing belt, using 3D printing, to obtain successive profiled parts.

This technique has the disadvantage of being excessively slow, as the 3D printing of the successive profiled parts must be carried out individually on the timing belt, i.e., one at a time; increasing complication and manufacturing time when the profiled external face needs to include profiled parts of different geometries distributed along the belt.

An additional disadvantage of this technique is that 3D printing directly on the belt of the profiled parts presents several problems, including: the impossibility of obtaining profiled parts of any geometric shape; the impossibility of fixing only a portion of the base or bottom surface of the profiled part onto the toothed belt; and the impossibility of integrating hooks or metal parts in the profiled element during 3D printing because they interfere with the displacements of the print head.

A second known technique, closer to this invention, consists of carrying out: in a first phase, the manufacture of profiled parts with the geometry or geometries necessary to form a shaped external face on a prefabricated timing belt; and in a second phase, the fixing of the profiled parts, previously manufactured, onto the external face of the timing belt.

This second technique has the advantage, compared to the first technique described above, that it is possible to have a stock of different prefabricated profiled parts and to assemble them on a timing belt in a short time, which significantly reduces the delivery time of the timing belt with a profiled outer side from the time it is ordered.

The manufacture of profiled parts by moulding or machining makes the cost of manufacturing them considerably more expensive, which has an impact on the final cost of the belt.

It is known within prior art that these prefabricated profiled parts are fastened to the timing belt by means of bolts that pass through the belt and are fastened to nuts on the inside face of the belt. This fastening technique requires precise machining of the mounting holes of the profiled parts on the belt and has the disadvantage that the set of holes along the belt significantly reduces the strength of the belt.

Another known technique is fixing the profiled parts to the belt by means of adhesives, although this solution does not guarantee the stability of the parts throughout the lifetime of the timing belt.

EP 3346160 A1 disclose 1a manufacturing process for the cohesive attachment of a profile with at least one profile element on a toothed belt prefabricated as a semi-finished product with a toothed side and with a toothed belt back located on the rear of the toothed side of the toothed belt.

CN108561504A disclose a 3D printed synchronous belt that comprises an elastomer layer and a skeleton layer, and the elastomer layer and the skeleton layer are printed layer by layer in the synchronous belt circumferential direction by 3D printing, and are alternately superposed.

WO 2016/123645 A1 relates to an endless belt with a metal belt body, said endless belt having an outer side and an inner side, the outer side and the inner side being connected together by lateral surfaces.

Other internet documents that teach the manufacture of belts using a 3D printing method are listed below:
"Timing Belts & Components for 3D Printers" (https://www.bbman.com/3d-printers/).
"Customizable GT2 timing belt" (https://www.thingiverse.com/thing:1975381).
"GT3 120mm Timing Belt (https://www.thingiverse.com/thing :325085).
"Zen Toolworks Flexible Filament 3D Printed Timing Belt" (https://www.youtube.com/watch?v=xgGvaA9S44E)

Therefore, the technical problem that arises is the development of a method of manufacturing a timing belt with a multifunctional profiled outer face, which provides a solution to the aforementioned disadvantages.

### Explanation of the invention

The present invention relates to a method of manufacturing a timing belt according to independent claim 1.

This new method of manufacturing a timing belt with a multifunctional profiled outer face - involving firstly providing a prefabricated timing belt as a semi-finished product, provided with a toothed inner face; secondly, manufacturing a series of profiled parts; and thirdly, fixing said profiled parts on the outer face of the timing belt, to define a profiled outer face in said timing belt - has technical characteristics that allow:
- a reduction in the production time of timing belts with a profiled outer face;
- an increase in the efficiency of the manufacturing process;
- the incorporation of metal parts into the profiled parts intended to be attached to the timing belt; and
- fixing the polyurethane profile parts by heating and vulcanisation on the polyurethane belts, within parameters that minimise assembly time and guarantee a permanent fixing of the profile parts to the timing belt.

In accordance with the invention, the method comprises:
- the manufacture of the polyurethane profiled parts by 3D printing, and the selection of a polyurethane timing belt, with a hardness between 65 and 95 Shore, and a thickness between 3 and 15 millimetres, in both cases;
- heating the surfaces of the profiled parts and of the timing belt to be joined with a heat lamp with a temperature of 450ºC, placed at a distance from each of these surfaces of between 3 millimetres for the hardest polyurethane (95 Shore) and 5 millimetres for the softest (65 Shore), and for a variable time depending on the thickness of the parts and of the belt to be joined, this time being between 15 and 21 seconds for polyurethane of a hardness of 65 Shore, and between 18 and 24 seconds for polyurethane of a hardness of between 75 and 80 Shore, and between 21 and 27 seconds for polyurethane of a hardness of between 75 and 80 Shore, and between 21 and 27 seconds for polyurethane of a hardness of 65 Shore; between 18 and 24 seconds for polyurethane of a hardness between 75 and 80 Shore, and between 21 and 27 seconds for polyurethane of a hardness of 95 Shore; and
- the positioning of the profiled parts on the suitable positions of the toothed belt and pressing them together until they are permanently connected to each other.

The aforementioned parameters of the manufacturing method, relating to the type of material, material thicknesses and hardness as well as temperatures and heating times for joining, guarantee permanent fixing and integration of the profiled parts into the timing belt.

The developed method allows the manufacture of a multifunctional synchronous timing belt conveyor, with the coupling of profiled parts that allow total control of the process, determining the exact location of the transported element with the counting of the teeth of the belt, as well as reducing the weight of the transport system. This increases its versatility and allows the adhesion of different plastic and metallic materials that permit the proper integration of the belt into various industrial sectors.

This method allows the manufacture of timing belts with a precise positioning of the profiled parts on its outer face, suitable, among other areas, for the automotive sector in which greater control of the location of the parts forming the outer profiled surface of the timing belt is required, since in its assembly lines most of the phases are automated so require precise detection.

The method of the invention also makes it possible to limit the area of attachment of the base or bottom surface of the profiled part to the timing belt, for example to a narrow cross-sectional area of the profiled part. This is particularly suitable when such profiled parts are of considerable dimensions, since in such cases the fixing of the whole of the base or bottom surface of the profiled part to the timing belt may prevent the belt from curving in the areas of smaller turning radius, where the driving means of the timing belt are usually located, or cause undesired tensions in the joint areas which may affect them.

The pre-manufacturing of polyurethane profile parts by 3D printing does not have the formal limitations of the parts printed directly on the timing belt, making it much more versatile.

This separate printing of the polyurethane profiled parts allows them to be manufactured in the most suitable position to define holes, guides or shapes that allow the subsequent assembly of various parts, hooks or metal inserts, without the limitations of 3D printing the part directly onto the timing belt.

According to the invention, this method comprises, prior to the arrangement of the profiled parts in the respective positions on the outer face of the timing belt, the placing of a metal piece covering a part of the base or lower surface of the profiled part between at least one of the polyurethane profiled parts and the timing belt. The attachment of said polyurethane profiled part to the timing belt is carried out on all or part of the remaining surface of the base or lower surface of said polyurethane profiled part.

### Brief description of the contents of the drawings.

To complement this description and in order to facilitate the understanding of the features of the invention, this explanation is accompanied by a set of drawings in which, by way of illustration and not limitation, the following has been represented:
- Figure 1 shows an elevated view of a portion of a first example of an embodiment of a timing belt with a profiled outer face, made according to the method of the invention.
- Figure 2 schematically represents the heating phase of the profiled part and of the timing belt of Figure 1, prior to their joining according to the method of the invention.
- Figure 3 shows an elevated view of a portion of a second embodiment of a timing belt with a profiled outer face according to the invention, incorporating a metallic piece between the profiled part and the timing belt.
- Figure 4 shows a profile, sectioned and exploded view of the timing belt, the metal part and the profiled part of Figure 3.
- Figure 5 shows an elevated view of the connection of a large profiled part, fixed by an intermediate transverse strip to the timing belt, to allow the belt to be curved in the areas with the smallest turning radius in its path.

### Detailed description of embodiments of the invention.

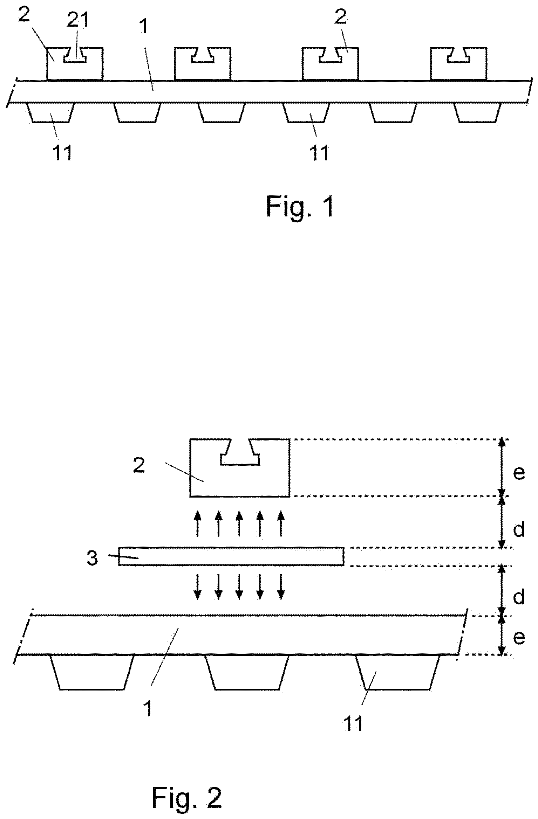

Figure 1 shows a portion of a polyurethane timing belt (1), provided with transverse teeth (11) on its inner side and a profiled outer side formed by a series of profiled parts generically referred to as (2), fixed to the timing belt according to the method of the invention.

The profiled parts (2) are manufactured separately from the timing belt (1) by 3D printing with polyurethane.

Both the timing belt (1) and the profiled parts (2), both made of polyurethane, have a hardness between 65 and 95 Shore, and a thickness (e) between 3 and 15 millimetres, in both cases;
As shown in figure 2, in order to join the profiled parts (2) to the timing belt (1), they are heated with a heat lamp (3) with a scope of 450ºC, located at a variable distance (d) from each of said surfaces, said distance (d) being between 3 millimetres for the hardest polyurethane (95 Shore) and 5 millimetres for the one with the lowest hardness (65 Shore).

Table 1 shows the distance "d" of the heat lamp for polyurethanes of the hardnesses used in the method of the invention:

**Table 1**

| **Hardness** | 65 Shore | 75/80 Shore | 95 Shore |
|---|---|---|---|
| **Distance (d)** | 5 mm. | 4 mm. | 3 mm. |

The heating time of the profiled parts (2) and the timing belt (1) to be joined varies according to the hardness of the parts, and is between 15 and 21 seconds for polyurethane of 65 Shore hardness, between 18 and 24 seconds for polyurethane of 75 and 80 Shore hardness, and between 21 and 27 seconds for polyurethane of 95 Shore hardness, as shown in Table 2, depending on the thickness.

**Table 2**

| **Hardness** | 65 Shore | | | 75/80 Shore | | | 95 Shore | | |
|---|---|---|---|---|---|---|---|---|---|
| **Thickness (mm.)** | < 6 | 6-10 | 11-15 | < 6 | 6-10 | 11-15 | < 6 | 6-10 | 11-15 |
| **Time (sec.)** | 15 | 18 | 21 | 18 | 21 | 24 | 21 | 24 | 27 |

Once the profiled parts (2) and the toothed belt (1) have been heated to the specified parameters, they are positioned and pressed into position to ensure that they are permanently connected to each other.

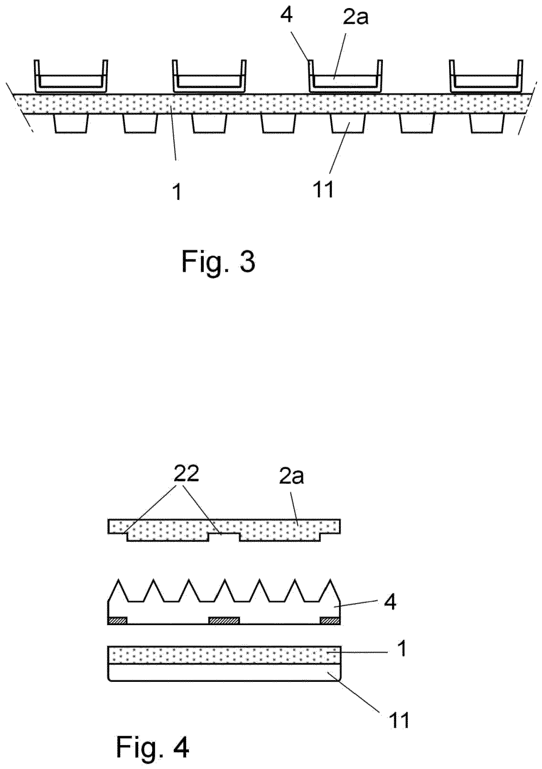

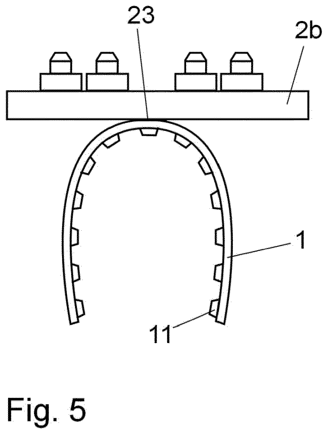

As mentioned above, the separate 3D printing of the profiled parts makes it possible to manufacture different profiled parts (2, 2a, 2b) in the most suitable position depending on the geometry to be obtained, allowing the definition of, for example: guides (21) on the profiled part (2), as shown in Figure 1, for the assembly of various parts; recesses (22) on the base or lower surface of the profiled parts (2a), as shown in figure 4, for the fastening of plates (4); or metallic elements between the profiled parts (2) and the toothed belt (1), or of profiled parts (2b) of large dimensions, as shown in Figure 5.

In the example shown in figures 3 and 4, the profiled parts (2a), once heated in accordance with the parameters previously indicated, are fixed to the toothed belt (1) only on part of their base or lower surface, with the rest of said base or lower surface being arranged on the metal plate (4), which is integrated and immobilised on the finished toothed belt.

As shown in Figure 5, the method of the invention also allows the fixing of profiled parts (2b) of large dimensions to the timing belt (1), by an intermediate, relatively narrow, transverse strip (23), to allow the bending of the timing belt (1) as shown in said Figure 5, without hindering said bending in the areas of smaller turning radius of its path.

Having sufficiently described the nature of the invention, as well as an example of a preferred embodiment, it is hereby stated for the appropriate purposes that the materials, shape, size and arrangement of the elements described may be modified, provided that this does not entail an alteration of the essential features of the invention claimed below.

## Claims

1. Method of manufacturing a timing belt with a multifunctional profiled outer face, comprising:
- the supply of a prefabricated timing belt (1) as a semi-finished product, provided with a toothed surface on one inner side;
- the production of a series of profiled parts (2, 2a, 2b), and
- the fixing of said profiled parts (2, 2a, 2b) onto the outside face of the timing belt in order to define a profiled outer face on said timing belt; wherein the following is carried out:
- the manufacture of the polyurethane profiled parts (2, 2a, 2b) by means of 3D printing, and the selection of the polyurethane timing belt (1) with a hardness between 65 and 95 Shore and a thickness between 3 and 15 millimetres, in both cases;
- heating the surfaces of the profiled parts (2, 2a, 2b) to be joined and the timing belt (1) with a heat lamp with a temperature of 450°C, placed at distances from each of these surfaces of between 3 millimetres for the hardest polyurethane (95 Shore) and 5 millimetres for the softest (65 Shore), and for a time varying according to the thickness and hardness of the parts and the timing belt (1) to be joined, this time between 15 and 21 seconds for polyurethane of a hardness of 65 Shore, and between 18 and 24 seconds for polyurethane of a hardness of 75 and 80 Shore, and between 15 and 27 seconds for polyurethane of a hardness of 95 Shore, and between 18 and 24 seconds for polyurethane of a hardness of 75 and 80 Shore, and between 18 and 27 seconds for polyurethane of a hardness of 95 Shore; between 18 and 24 seconds for polyurethane of a hardness between 75 and 80 Shore, and between 21 and 27 seconds for polyurethane of a hardness of 95 Shore; and
- the arrangement of the profiled parts (2, 2a, 2b) in the respective positions on the outer side of the timing belt and the pressing of the profiled parts until they are permanently connected to each other.

2. Method according to Claim 1, **characterised in that** it comprises, prior to the arrangement of the profiled parts (2a) in the respective positions on the outer face of the timing belt (1), the placing between at least one of the profiled parts (2a) of polyurethane and the timing belt (1) of a metal piece (4) covering a part of the base or lower surface of the profiled part (2a) so that the connection of said polyurethane profile part (2a) to the timing belt (1) is made on all or part of the remaining surface of the base or lower surface of said polyurethane profile part (2a).

## Patentansprüche

1. Verfahren zur Herstellung eines Zahnriemens mit einer multifunktionalen profilierten Außenseite, wobei es Folgendes umfasst:
- Bereitstellen eines vorgefertigten Zahnriemens (1) als Halbfertigprodukt, der auf einer Innenseite mit einer gezähnten Fläche versehen ist;
- Herstellen einer Reihe von profilierten Teilen (2, 2a, 2b), und
- Befestigen der profilierten Teil (2, 2a, 2b) auf der außenliegenden Seite des Zahnriemens, um eine profilierte Außenseite auf dem Zahnriemen festzulegen;
wobei Folgendes durchgeführt wird:
- Herstellen der profilierten Polyurethanteile (2, 2a, 2b) mittels 3D-Druck, und Auswählen des Polyurethan-Zahnriemens (1) derart, dass in beiden Fällen die Shore-Härte im Bereich von 65 bis 95 und die Dicke im Bereich von 3 bis 15 Millimeter liegt;
- Erhitzen der Oberflächen der profilierten Teile (2, 2a, 2b), welche an den Zahnriemen (1) angefügt werden sollen, mit einer Heizlampe, deren Temperatur 450 °C beträgt, wobei sie in einem Abstand von jeder dieser Flächen angeordnet ist, der im Bereich von 3 Millimeter für das härteste Polyurethan (95 Shore) und 5 Millimeter für das weichste Polyurethan liegt, und zwar für eine Zeitdauer, die in Abhängigkeit von der Dicke und der Härte der Teile und des Zahnriemens (1) variiert, welche zusammengefügt werden sollen, wobei diese Zeitdauer im Bereich von 15 bis 21 Sekunden für Polyurethan mit einer Shore-Härte von 65, und im Bereich von 18 bis 24 Sekunden für Polyurethan mit einer Shore-Härte von 75 und 80, und im Bereich von 15 bis 27 Sekunden für Polyurethan mit einer Shore-Härte von 95, und im Bereich von 18 bis 24 Sekunden für Polyurethan mit einer Shore-Härte von 75 und 80, und im Bereich von 18 bis 27 Sekunden für Polyurethan mit einer Shore-Härte von 95; im Bereich von 18 bis 24 Sekunden für Polyurethan mit einer Shore-Härte im Bereich von 75 bis 80, und im Bereich von 21 bis 27 Sekunden für Polyurethan mit einer Shore-Härte von 95 liegt; und
- Anordnen der profilierten Teile (2, 2a, 2b) an den jeweiligen Positionen auf der Außenseite des Zahnriemens und Pressen der profilierten Teile, bis sie dauerhaft miteinander verbunden sein.

2. Verfahren gemäß Anspruch 1, **dadurch gekennzeichnet, dass** es, im Vorfeld der Anordnung der profilierten Teile (2a) an den jeweiligen Positionen auf der Außenseite des Zahnriemens (1), das Anordnen eines Metallstücks (4), welches einen Abschnitt der Boden- oder untenliegenden Fläche des profilierten Teils (2a) bedeckt, zwischen mindestens einem der profilierte Teile (2a) aus Polyurethan und dem Zahnriemen (1) umfasst, sodass die in der Gesamtheit oder in Teilbereichen der verbleibenden Fläche der Boden- oder untenliegenden Fläche des Polyurethanprofilteils (2a) die Verbindung zwischen dem Polyurethanprofilteil (2a) und dem Zahnriemen (1) hergestellt wird.

## Revendications

1. Procédé de fabrication d'une courroie de distribution avec une face extérieure profilée multifonctionnelle, comprenant :
- la fourniture d'une courroie de distribution préfabriquée (1) en tant que produit semi-fini, pourvue d'une surface dentée sur un côté intérieur ;
- la production d'une série de parties profilées (2, 2a, 2b), et
- la fixation desdites parties profilées (2, 2a, 2b) sur la face extérieure de la courroie de distribution afin de définir une face extérieure profilée sur ladite courroie de distribution ; dans lequel les étapes suivantes sont effectuées :
- la fabrication des parties profilées en polyuréthane (2, 2a, 2b) par impression 3D, et la sélection de la courroie de distribution en polyuréthane (1) d'une dureté comprise entre 65 et 95 Shore et d'une épaisseur comprise entre 3 et 15 millimètres, dans les deux cas ;
- le chauffage des surfaces des parties profilées (2, 2a, 2b) à assembler et de la courroie de distribution (1) avec une lampe chauffante à une température de 450°C, placée à des distances de chacune de ces surfaces comprises entre 3 millimètres pour le polyuréthane le plus dur (95 Shore) et 5 millimètres pour le plus mou (65 Shore), et pendant un temps variant en fonction de l'épaisseur et de la dureté des parties et de la courroie de distribution (1) à assembler, ce temps étant entre 15 et 21 secondes pour le polyuréthane d'une dureté de 65 Shore, et entre 18 et 24 secondes pour le polyuréthane d'une dureté de 75 et 80 Shore, et entre 15 et 27 secondes pour le polyuréthane d'une dureté de 95 Shore, et entre 18 et 24 secondes pour le polyuréthane d'une dureté de 75 et 80 Shore, et entre 18 et 27 secondes pour le polyuréthane d'une dureté de 95 Shore ; entre 18 et 24 secondes pour le polyuréthane d'une dureté entre 75 et 80 Shore, et entre 21 et 27 secondes pour le polyuréthane d'une dureté de 95 Shore ; et
- la disposition des parties profilées (2, 2a, 2b) dans les positions respectives sur le côté extérieur de la courroie de distribution et la pression des parties profilées jusqu'à ce qu'elles soient reliées de manière permanente les unes aux autres.

2. Procédé selon la revendication 1, **caractérisé en ce qu'**il comprend, avant l'agencement des parties profilées (2a) dans les positions respectives sur la face extérieure de la courroie de distribution (1), la mise en place entre au moins l'une des parties profilées (2a) de polyuréthane et la courroie de distribution (1) d'une pièce métallique (4) recouvrant une partie de la base ou de la surface inférieure de la partie profilée (2a) de sorte que la connexion de ladite partie profilée en polyuréthane (2a) à la courroie de distribution (1) est réalisée sur tout ou partie de la surface restante de la base ou de la surface inférieure de ladite partie profilée en polyuréthane (2a).
